# EUROPEAN PATENT APPLICATION

(11) **EP 3 754 305 A1**
(43) Date of publication of application: **23.12.2020**
(21) Application number: 20178150.7
(22) Date of filing: 04.06.2020
(51) Int. Cl.: G01F 1/68, G01F 5/00

(54) **FLOW METER**

(30) Priority: 17.06.2019 PL 43026419
(71) Applicant: Apator Metrix Spolka Akcyjna, 83-110 Tczew (PL)
(72) Inventor: BARCZYNSKI, JERZY WOJCIECH, 83-110 Tczew (PL)
(74) Representative: Wroblewski, Marcin Jan

(57) **Abstract**

The invention relates to a flow and volume meter for a flowing fluid, in particular gas, comprising a measurement system and a counter in the form of a data analysing unit (3), which meter is characterised in that the measurement system comprises a vortex tube (4) placed between the inlet (1) and the outlet (2) of the measurement system and at least two temperature sensors (T1, T2, T3) connected to a data analysing unit (3), wherein: the first temperature sensor (T1) is placed at the inlet (1) of the vortex tube (4) and the second temperature sensor (T3) is placed at the outlet of the hot stream (7) from the vortex tube (4), or the first temperature sensor (T1) is placed at the inlet (1) of the vortex tube (4) and the second temperature sensor (T2) is placed at the outlet of the cold stream (8) from the vortex tube (4), or the first temperature sensor (T2) is placed at the outlet of the cold stream (8) from the vortex tube (4) and the second temperature sensor (T3) is placed at the outlet of the hot stream (7) from the vortex tube (4).

## Description

The invention relates to a flow and volume meter for a flowing fluid, in particular gas, flowing through a gas meter. Measurement in the meter according to the invention is made based on the difference in fluid temperatures after flowing through a vortex tube.

In state of the art, there are known volume meters in the form of, e.g. positive displacement gas meters determining the volume of a flowing fluid based on the product of the volume of a measurement chamber and the number of cycles of filling/emptying this chamber/chambers. Such gas meters include, e.g. bellows gas meters, drum meters and rotor flow meters. Fluid flow measurement also uses turbine flow meters in which a flowing fluid drives the blades of a turbine. The rotary movement of the turbine is transferred to a counter, in which the volume of the flowing medium is calculated by integration. Other flow meters also include ultrasound flow meters - calculating the velocity, and then the volume of a flowing fluid based on the difference in sound propagation velocities in the direction of flow and the one opposite to it. There are also known Venturi flow meters using the pressure drop effect in a measuring element. The following are also used to measure the flow of fluids: rotameters, thermal and calorimetric flow meters, electromagnetic flow meters, Coriolis flow meters.

A flow meter design is also known from Polish patent description no. PL224360 B1. The patent description discloses a flow meter with an electronic readout, which comprises a body with a rotor chamber along with an inlet spigot and an outlet spigot for water. The rotor chamber is enclosed by a top cover comprising an electronic circuit, and in this chamber, there is a rotor seated on an axis perpendicular to the flow direction of water. A rotation indicator for the rotor in the form of an assembly of attenuating elements is fixed to the rotor hub. The RLC electronic circuit is mounted in the cover, and by means of a coil it emits a constant stream of electrical impulses directed towards the lines of rotations of the attenuating elements. An assembly of balancing elements is fixed at the other side of the hub.

The patent GB2463488 describes a fluid flow measurement involving the measurement of disruptions in a fluid stream. An element triggering vertices in the flowing medium is placed in the conduit through which the fluid flows. The frequency of the generation of disruptions (vertices) is proportional to the flow rate. The flow rate and volume of the fluid are determined by measuring the frequency of the generation of these disruptions.

The publication EP1536211 describes a method for determining the flow rate, and also the volume of liquid flowing through a given surface perpendicular to the direction of a magnetic field, using the phenomenon of induction. According to Faraday's law of electromagnetic induction, in a conductor moving in a magnetic field there is an induced electromotive force dependent on the strength of the magnetic field and the velocity of movement of the conductor. In flow measurements using the electromagnetic method, the function of a conductor is served by the flowing liquid.

Although numerous designs of various flow meters are known from prior art, new designs are still being researched. In particular, it is desirable to develop a meter whose design would allow eliminating moving elements from the most commonly used devices for measuring the flow and volume of fluids, and important solutions include those which would enable reducing the dimensions of these devices.

It was an objective of the invention to develop a meter whose design would allow reducing the number of moving elements in the device and reducing its dimensions. The essence of the invention is a flow and volume meter for a flowing fluid, in particular gas, comprising a measurement system and a counter in the form of a data analysing unit, characterised in that the measurement system comprises a vortex tube placed between the inlet and the outlet of the measurement system, and at least two temperature sensors connected to the data analysing unit, wherein:
a) the first temperature sensor is placed at the inlet of the measurement system and the second temperature sensor is placed at the outlet of the hot stream from the vortex tube, or
b) the first temperature sensor is placed at the inlet of the measurement system and the second temperature sensor is placed at the outlet of the cold stream from the vortex tube, or
c) the first temperature sensor is placed at the outlet of the cold stream from the vortex tube, and the second temperature sensor is placed at the outlet of the hot stream from the vortex tube.

Preferably, the meter according to the invention comprises an additional third sensor, the first temperature sensor being placed at the inlet of the measurement system, the second temperature sensor being placed at the outlet of the cold stream from the vortex tube, and the third temperature sensor being placed at the outlet of the hot stream from the vortex tube.

Equally preferably, in the meter according to the invention, the data analysing unit is provided with a processor and a display.

The invention allows the elimination of moving elements from the most commonly used devices for measuring the flow and volume of fluids. It also enables reducing the dimensions of these devices.

In a case in which the first temperature sensor is placed at the outlet of the cold stream from the vortex tube, and the second temperature sensor is placed at the outlet of the hot stream from the vortex tube, the resulting temperature difference is the highest, which in turn translates into the most accurate measurement of flow and volume of a fluid, in particular gas.

The object of the invention is presented in embodiments not limiting its scope, and in the drawing, in which Figs. 1-3 present a cross-section of the flow meter according to the invention in embodiments with two temperature sensors placed in different locations; Fig. 4 present a cross-section of the flow meter according to the invention comprising three temperature sensors; Fig. 5 constitutes a sample plot of the relationship between the difference in temperatures and the flow rate.

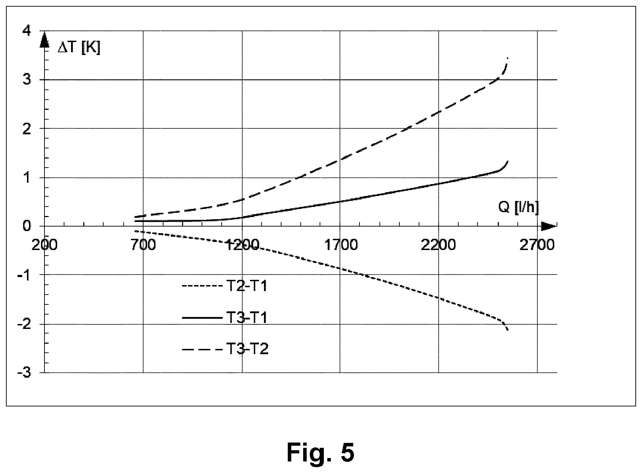

The plot presented in Fig. 5 presents the difference in temperatures for a relatively small overpressure at the inlet of the vortex tube. It is obvious that, for the given geometrical parameters of the tube, the temperature difference and the flow of fluid will depend on the overpressure at its inlet.

The meter in an embodiment comprises a measurement system, an inlet 1 and an outlet 2 of the measurement system, and a counter in the form of a data analysing unit 3. The measurement system constitutes a vortex tube 4 placed between the inlet 1 and the outlet 2 of the measurement system. The data analysing unit 3 comprises a processor 5 and a display 6.

The inlet of the measurement system 1, at the same time constituting the inlet of the vortex tube 4, delivers the fluid to the separating chamber of the vortex tube 4. In this chamber, the stream of fluid subjected to a swirling motion is separated into a hot and a cold stream. The hot stream is discharged from the vortex tube 4 via the outlet 7, and the cold stream - via the outlet 8. Before the outlet 2 of the measurement system, both streams are mixed again. Temperature sensors T1, T2, T3 are placed in the path of these streams. The signal from the temperature sensors T1, T2, T3 is transmitted to the processor 5, where it is converted into flow and/or volume. The calculated flow or volume which has flown through the meter can be displayed on the display of the counter 6 or transmitted to a different recording device.

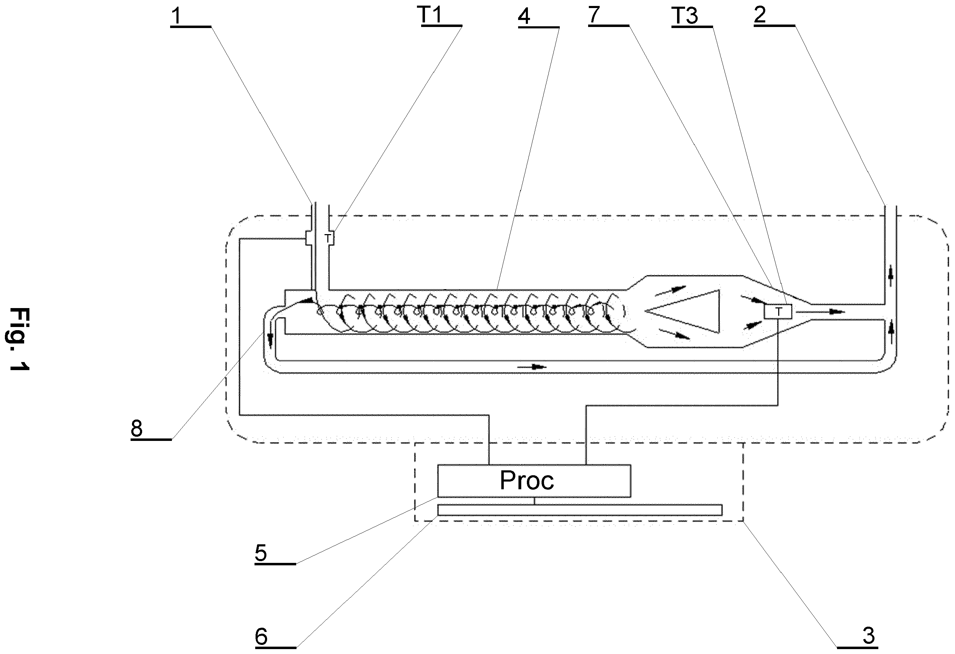

Referring to Fig. 1, the meter in a second embodiment comprises a temperature sensor T1 at the inlet 1 of the vortex tube 4 and a temperature sensor T3 at the outlet 7 of hot gas from the vortex tube 4, and flow through the meter is calculated based on the temperature difference and it is proportional to it. The relationship between the resulting difference in temperatures and the flow rate is shown in Fig. 5 (T3-T1).

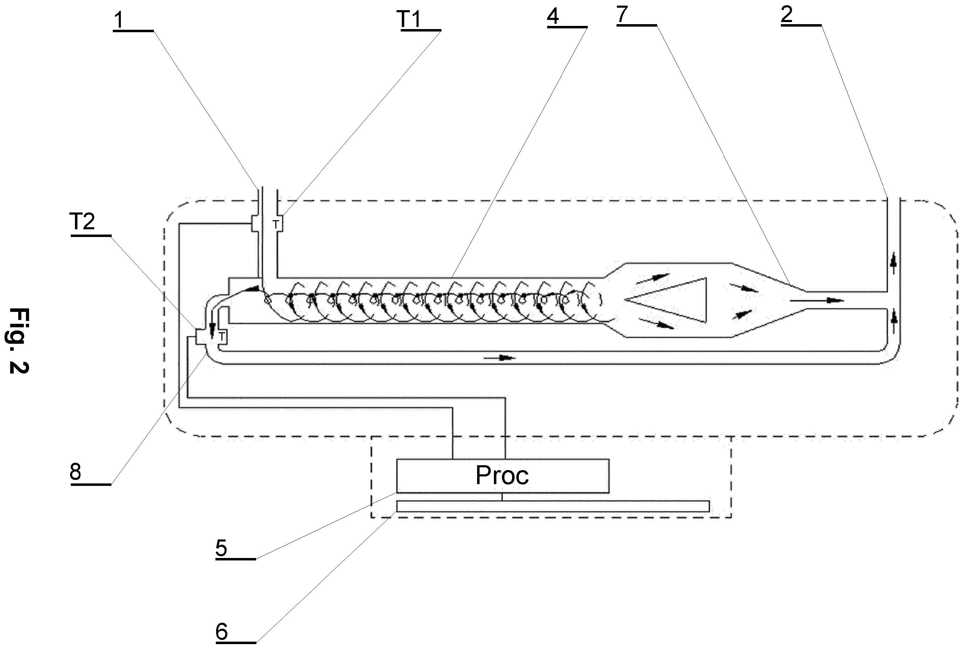

Referring to Fig. 2, the meter in a third embodiment comprises a temperature sensor T1 at the inlet 1 of the vortex tube 4 and a temperature sensor T2 at the outlet 8 of cold gas from the vortex tube, and the flow through the meter is calculated based on the temperature difference and it is proportional to it. The relationship between the difference in temperatures and the flow rate is shown in Fig. 5 (T2-T1).

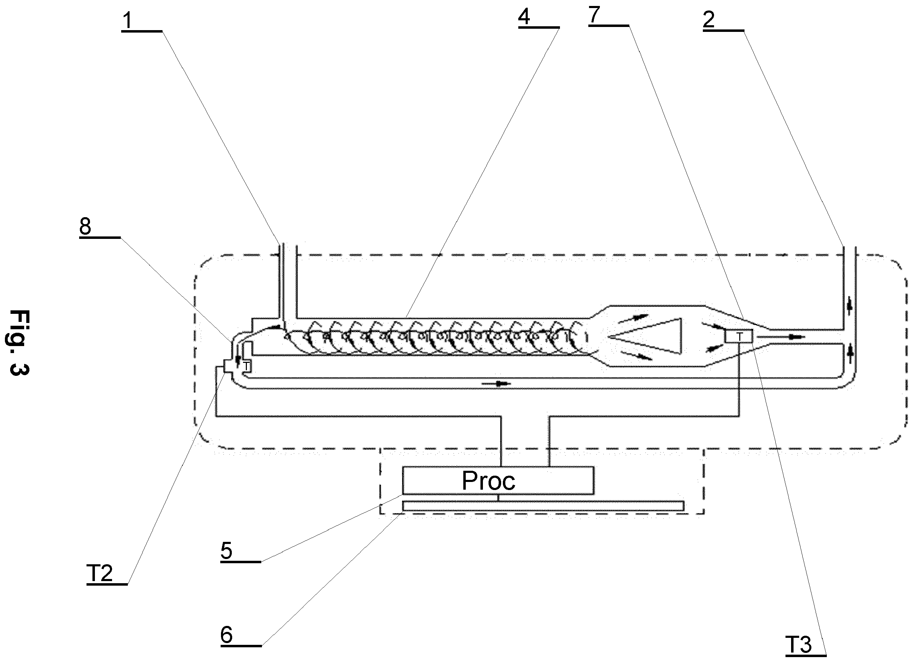

Referring to Fig. 3, the meter in another embodiment comprises one temperature sensor T3 at the outlet 7 of hot gas from the vortex tube 4, a second temperature sensor T2 at the outlet 8 of cold gas from the vortex tube 4, and the flow through the meter is calculated based on the temperature difference and it is proportional to it. The relationship between the difference in temperatures and the flow rate is shown in Fig. 5 (T3-T2).

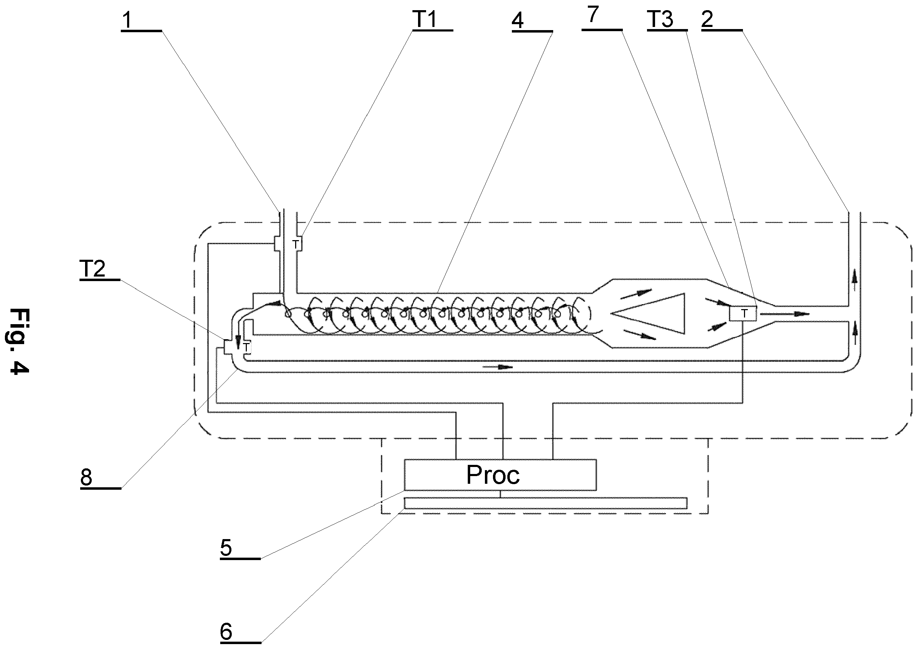

Referring to Fig. 4, the meter in an embodiment comprises a temperature sensor T1 at the inlet 1 of the vortex tube 4, a temperature sensor T2 at the outlet of cold gas, and a temperature sensor T3 at the outlet of hot gas from the vortex tube, and the flow through the meter is calculated based on the temperature difference and it is proportional to it. In this case, the sensors at the outlet of cold gas and the outlet of hot gas are provided for determining flow through the meter, and the sensor at the inlet is provided for adjusting the volume of gas to conventional conditions. The relationship between the difference in temperatures and the flow rate is shown in Fig. 5 (plot T3-T2).

## Claims

1. A flow and volume meter for a flowing fluid, in particular gas, comprising a measurement system and a counter in the form of a data analysing unit (3), **characterised in that** the measurement system comprises a vortex tube (4) placed between the inlet (1) and the outlet (2) of the measurement system and at least two temperature sensors (T1, T2, T3) connected to the data analysing unit (3), wherein:
a. the first temperature sensor (T1) is placed at the inlet (1) of the vortex tube (4) and the second temperature sensor (T3) is placed at the outlet of the hot stream (7) from the vortex tube (4), or
b. the first temperature sensor (T1) is placed at the inlet (1) of the vortex tube (4) and the second temperature sensor (T2) is placed at the outlet of the cold stream (8) from the vortex tube (4), or
c. the first temperature sensor (T2) is placed at the outlet of the cold stream (8) from the vortex tube (4) and the second temperature sensor (T3) is placed at the outlet of the hot stream (7) from the vortex tube (4).

2. The meter according to claim 1, **characterised in that** it comprises an additional third sensor, the first temperature sensor (T1) being placed at the inlet (1) of the vortex tube (4), the second temperature sensor (T2) being placed at the outlet of the cold stream (8) from the vortex tube (4) and the third temperature sensor (T3) being placed at the outlet of the hot stream (7) from the vortex tube (4).

3. The meter according to claim 1, **characterised in that** the data analysing unit (3) is provided with a processor (5) and a display (6).
